# EUROPEAN PATENT APPLICATION

(11) **EP 4 442 483 A1**
(43) Date of publication of application: **09.10.2024**
(21) Application number: 24166150.3
(22) Date of filing: 26.03.2024
(51) Int. Cl.: B60L 1/00, B60L 53/20, B60R 16/03, H02J 1/10

(54) **VEHICLE BATTERY CHARGING APPARATUS**

(30) Priority: 03.04.2023 JP 2023059969
(71) Applicant: Alps Alpine Co., Ltd., Tokyo 145-8501 (JP)
(72) Inventor: Sato, Tetsuo, Iwaki-City, Fukushima (JP)
(74) Representative: Schmitt-Nilson Schraud Waibel Wohlfrom Patentanwälte Partnerschaft mbB

(57) **Abstract**

A vehicle battery charging apparatus includes an USB power source that selectively performs a power input operation as a power reception side or a power output operation as a power supply side, via an USB Type-C terminal, a charging determination circuit that determines whether charging of the vehicle battery is required, and a PD controller that requests a mobile battery to operate as the power supply side and sets the USB power source to operate as the power reception side when the charging determination circuit determines that the charging is required.

## Description

The present disclosure relates to vehicle battery charging apparatuses for supplying electric power to (or powering) a battery of the vehicle (hereinafter also referred to as a "vehicle battery").

A conventionally known portable battery charging apparatus for a vehicle includes an output part to be connected to a cigar jack of the vehicle, and is configured to supply electric power charged in a battery part to a vehicle battery through a protection circuit and a discharge circuit, thereby enabling the vehicle battery to be easily charged, as proposed in Japanese Laid-Open Patent Publication No. 2012-517208, for example. In a case where the vehicle battery is running out (that is, an overdischarge is occurring), this battery charging apparatus can be used to supply the charged electric power to the vehicle battery through the cigar jack, so as to quickly avoid the overdischarge state.

The portable battery charging apparatus for the vehicle proposed in Japanese Laid-Open Patent Publication No. 2012-517208 referred above is advantageous in that a dedicated charging terminal is not required because the portable battery charging apparatus can be connected to the cigar jack to charge the vehicle battery. But recently, vehicles having no cigar jack have increased, and there is a problem in that the portable battery charging apparatus cannot charge the vehicle battery of such vehicles having no cigar jack, thereby lacking versatility. In addition, because the voltage of the output part connected to the cigar jack is set to 16.8 V, for example, in a case where an overdischarge of the vehicle battery occurs and the terminal voltage of the vehicle battery becomes extremely low (8.5 V or lower, for example), a circuit for absorbing such a potential difference is required, thereby increasing a size of the structure.

One object according to an aspect of the present disclosure is to provide a vehicle battery charging apparatus having versatility and applicable to a vehicle having no cigar jack, and can reduce the size of the structure by charging a vehicle battery with a voltage corresponding to a discharge state of the vehicle battery.

The invention relates to a vehicle battery charging apparatus according to the appended claims. Embodiments are disclosed in the dependent claims. According to an aspect of the present disclosure, a vehicle battery charging apparatus connectable to a portable charger in conformance with a universal serial bus (USB) power delivery (PD) standard via a USB Type-C cable and a USB Type-C terminal, includes a power supply and reception circuit configured to selectively perform a power input operation as a power reception side or a power output operation as a power supply side, via the USB Type-C terminal; a charging determination circuit configured to determine whether or not a battery installed in a vehicle requires charging; and a supply requesting and reception setting circuit configured to request the portable charger to operate as the power supply side and to set the power supply and reception circuit to operate as the power reception side, when the charging determination circuit determines that the charging is required.

Other objects and further features of the present invention will be apparent from the following detailed description when read in conjunction with the accompanying drawings.
FIG. 1 is a diagram illustrating a configuration of a vehicle battery charging apparatus according to an embodiment; and
FIG. 2 is a flow chart illustrating an embodiment of an operation procedure of the vehicle battery charging apparatus according to the embodiment.

In recent years, vehicles having a universal serial bus (USB) terminal connectable to a portable terminal device or the like have increased. A vehicle battery can be charged by simply connecting an external portable charger (or mobile battery) to such an USB terminal that is becoming more popular. In particular, the external portable charger itself may simply conform to the USB power delivery (PD) standard that is becoming popular in recent years, and a portable charger that is in possession or is to be purchased for charging the portable terminal device, a laptop personal computer, or the like may be used as it is when charging the vehicle battery using a vehicle battery charging apparatus by connecting the external portable charger thereto. Further, because the vehicle can utilize the configuration associated with the USB terminal in conformance with the USB PD standard, the number of configurations to be added to implement embodiments of the present disclosure can be reduced.

The vehicle battery charging apparatus is preferably further provided with a battery voltage detector (or battery voltage detection means) configured to detect a terminal voltage of the vehicle battery, and a charging determination circuit (or charging determination means) configured to determine that charging of the vehicle battery is required when the terminal voltage detected by the battery voltage detector is lower than a predetermined threshold value. Thus, when the terminal voltage of the vehicle battery decreases as the discharge of the vehicle battery progresses, the charging of the vehicle battery can be started automatically by simply connecting the portable charger.

Alternatively, the vehicle battery charging apparatus is preferably further provided with an operating or controlling part (or operating or controlling means) to be operated by a user, and the charging determination circuit determines that charging of the vehicle battery is required when the operating or controlling part is operated by the user to instruct charging. Hence, when the user recognizes that the vehicle battery is overdischarged or when the user desires to avoid the overdischarge, it is possible to start charging the vehicle battery by simply connecting the portable charger after the user performs a predetermined operation from the operating or controlling part.

In addition, a supply requesting and reception setting circuit (or supply requesting/reception setting means) of the vehicle battery charging apparatus preferably requests the supply and sets the reception of electric power at a voltage value corresponding to a level of the terminal voltage detected by the battery voltage detector. More particularly, the vehicle battery has a rated voltage of 12 V, and the supply requesting and reception setting circuit preferably requests the supply and sets the reception corresponding to a profile of 9V3A when the terminal voltage is lower than a predetermined value (for example, 7 V) less than or equal to 9 V, and requests the supply and sets the reception corresponding to a profile of 15V3A when the terminal voltage is higher than the predetermined value. Accordingly, by charging at a charging voltage corresponding to the discharge state (terminal voltage) of the vehicle battery, a potential difference between the charging voltage and the terminal voltage of the vehicle battery can be reduced, and a circuit for absorbing this potential difference can be simplified, so that the size or scale of the circuit configuration can be reduced.

A vehicle battery charging apparatus according to embodiments of the present disclosure will be described below with reference to the drawings.

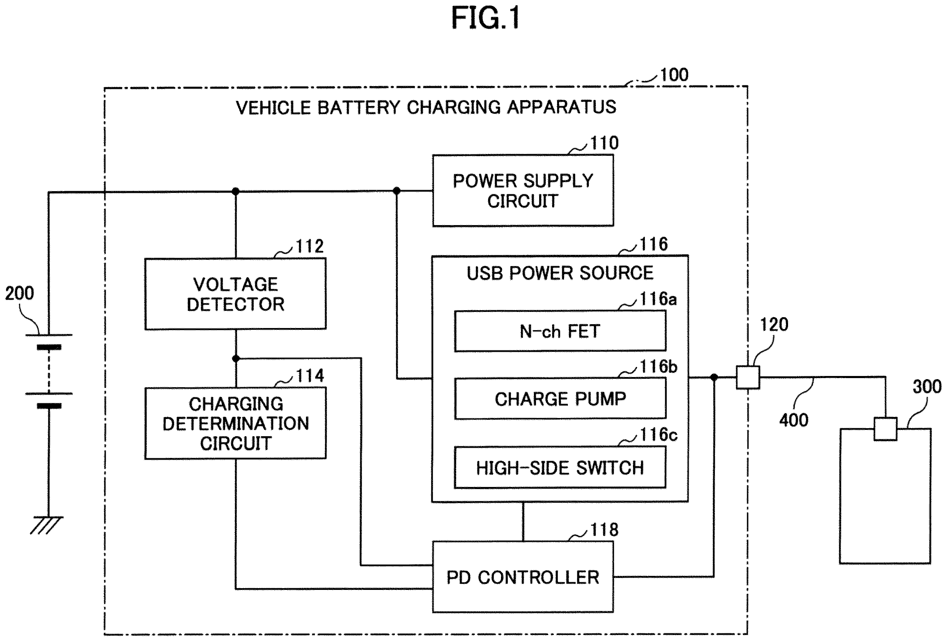

FIG. 1 is a diagram illustrating a configuration of the vehicle battery charging apparatus according to an embodiment. As illustrated in FIG. 1, the vehicle battery charging apparatus 100 according to the present embodiment includes a power supply circuit 110, a voltage detector 112, a charging determination circuit 114, a USB power source 116, and a power delivery (PD) controller 118.

The power supply circuit 110 generates an operating voltage Vdd (for example, 3.3 V) for each part of the vehicle battery charging apparatus 100.

The voltage detector 112 detects a terminal voltage of a battery (vehicle battery) 200 installed in a vehicle. The battery 200 has a rated voltage of 12 V, for example, and has a terminal voltage higher than or equal to 14 V in a fully charged state.

The charging determination circuit 114 determines whether or not charging of the battery 200 is required. For example, the charging determination circuit 114 determines that the charging is required when the terminal voltage of the battery 200 detected by the voltage detector 112 is lower than a predetermined threshold value (for example, 9 V when the battery is overdischarged). Alternatively, the charging determination circuit 114 determines that the charging is required when a user, who recognizes that the battery 200 is in an overdischarged state, performs a predetermined operation (for example, an operation of a switch as an operating or controlling part to instruct emergency charging) and instructs the charging.

The USB power source 116 performs a switching operation for transmitting and receiving electric power according to the USB PD (Power Delivery) standard. For example, in a case where the USB power source 116 operates as a source (supply side), the USB power source 116 generates electric power having output voltages of 5 V, 9 V, 15 V, and 20 V (at 3 A or 5 A, respectively) from the voltage applied from the battery 200, using an N-channel (N-ch) field effect transistor (FET) 116a and a charge pump 116b, and supplies the electric power to the outside from an USB Type-C terminal 120. On the other hand, in a case where the USB power source 116 operates as a sink (reception side), the USB power source 116 supplies electric power having various voltages transmitted to the USB Type-C terminal 120 to the battery 200 via a high-side switch (SW) 116c.

When the charging determination circuit 114 determines that the charging of the battery 200 is required and a mobile battery (portable charger) 300 is connected to the USB Type-C terminal 120 via an USB Type-C cable 400, the PD controller 118 requests a profile (PD setting) for operating as the source and supplying the electric power at 9V/3A or 15V/3A, with respect to the mobile battery 300, and sets the USB power source 116 to operate as the sink corresponding to the contents of the profile.

The USB power source 116 is an example of a power supply and reception circuit (or power supply and reception means). The charging determination circuit 114 is an example of a charging determination circuit (or charging determination means). The PD controller 118 is an example of a supply requesting and reception setting circuit (or supply requesting/reception setting means) . The voltage detector 112 is an example of a battery voltage detector (or battery voltage detection means).

The vehicle battery charging apparatus 100 according to the present embodiment has the configuration described above, and an operation thereof will be described below.

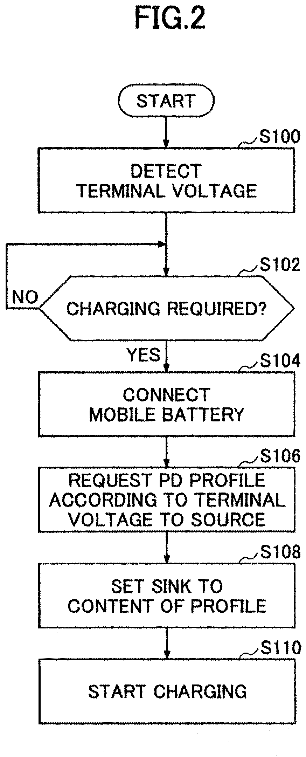

FIG. 2 is a flow chart illustrating an embodiment of an operation procedure of the vehicle battery charging apparatus 100 according to the present embodiment. When an accessory switch (not illustrated) of the vehicle is turned on and the power supply circuit 110 starts supplying the operating voltage Vdd to each part, the voltage detector 112 detects the terminal voltage of the battery 200 (process or step S100) .

Next, the charging determination circuit 114 determines whether or not charging of the battery 200 is required (process or step S102). When the charging is not required (NO in step S102), this determination of step S102 is repeated. On the other hand, when the terminal voltage of the battery 200 is lower than the predetermined threshold value (9 V) as described above, or when the user instructs the charging by the predetermined operation, for example, the charging of the battery 200 is required (YES in step S102).

Next, the mobile battery 300 is connected to the USB Type-C terminal 120 (process or step S104), the PD controller 118 requests the PD profile according to the detected terminal voltage of the battery 200, with respect to the mobile battery 300, in order to operate the mobile battery 300 as the source on the power supply side (process or step S106). More particularly, the PD controller 118 requests the profile for supplying the electric power at 9V/3A, with respect to the mobile battery 300, when the detected terminal voltage is lower than or equal to 7 V. The PD controller 118 requests the profile for supplying the electric power at 15V/3A, with respect to the mobile battery 300, when the detected terminal voltage is higher than 7 V. In addition, the PD controller 118 performs the setting of the sink side (the USB power source 116) corresponding to the profile requested with respect to the mobile battery 300 (process or step S108).

After the preparation for the charging is completed in the manner described above, the USB power source 116 starts charging the battery 200 with the electric power supplied from the mobile battery 300 (process or step S110).

Accordingly, the vehicle battery charging apparatus 100 according to the present embodiment can charge the battery 200 of the vehicle by simply connecting the external mobile battery 300 to the USB Type-C terminal 120 of the vehicle, which is becoming popular in recent years. Particularly, the external mobile battery 300 itself may be a battery in conformance with the USB PD standard, which is becoming popular in recent years, and a portable charger that is in possession or is to be purchased for charging a portable terminal device, a laptop personal computer, or the like may be used as it is when charging the battery 200 using the vehicle battery charging apparatus 100 by connecting the external mobile battery 300 thereto. Further, because the vehicle can utilize the configuration associated with the USB Type-C terminal 120 in conformance with the USB PD standard, the number of configurations (the voltage detector 112, the charging determination circuit 114, or the like) to be added to implement embodiments of the present disclosure can be reduced.

In addition, in the case where it is determined that the charging is required when the terminal voltage of the battery 200 detected by the voltage detector 112 is lower than the predetermined threshold value, it is possible to automatically start the charging of the battery 200 by simply connecting the mobile battery 300 to the USB Type-C terminal 120 when the discharge of the battery 200 progresses and the terminal voltage decreases. Moreover, even in the case where the user recognizes that the battery 200 of the vehicle is overdischarged or the user desires to avoid the overdischarge and the user performs the predetermined operation, it is possible to start charging the battery 200 by simply connecting the mobile battery 300 to the USB Type-C terminal 120.

Further, the battery 200 is charged according to the level of the terminal voltage of the battery 200, that is, charged with the profile of 9V3A in the case where the detected terminal voltage lower than or equal to 7 V, and charged with the profile of 15V3A in the case where the detected terminal voltage is higher than 7 V. Accordingly, by charging the battery 200 with the charging voltage according to the discharge state (terminal voltage) of the battery 200, the potential difference between the charging voltage and the terminal voltage of the battery 101 can be reduced, and the circuit (such as the high-side SW 116c in the USB power source 116) for absorbing the potential difference can be simplified, so that the size or scale of the circuit configuration can be reduced.

The present invention is not limited to the embodiments described above, and various variations, modifications, and substitutions can be made without departing from the scope of the claims. In the embodiment described above, one mobile battery 200 is connected to one USB Type-C terminal 120. However, in a case where a plurality of USB Type-C terminals 120 are provided, a plurality of mobile batteries 300 may be connected to the plurality of USB Type-C terminals 120, and a plurality of vehicle battery charging apparatuses 100 provided in correspondence with the plurality of USB Type-C terminals 120 may be connected in parallel to simultaneously supply charging electric power to the battery 200.

In the embodiment described above, the vehicle battery charging apparatus 100 is used as the sink (reception side) for charging the battery 200. However, in a case where data transmitted from a portable terminal device or the like is received by an on-vehicle head unit or the like via the USB Type-C terminal 120, the vehicle battery charging apparatus 100 may be operated as the source (supply side).

As described above, according to the embodiments of the present disclosure, the vehicle battery can be charged by simply connecting the external portable charger (mobile battery) to the USB terminal of the vehicle which is becoming more popular. Particularly, the external portable charger itself may be a charger in conformance with the USB PD standard, which is becoming popular in recent years, and a portable charger that is in possession or is to be purchased for charging a portable terminal device, a laptop personal computer, or the like may be used as it is when charging the vehicle battery using the vehicle battery charging apparatus by connecting the portable charger thereto. Further, because the vehicle can utilize the configuration associated with the USB Type-C terminal in conformance with the USB PD standard, the number of configurations to be added to implement embodiments of the present disclosure can be reduced.

### Reference Signs List

- 100: vehicle battery charging apparatus
- 110: power supply circuit
- 112: voltage detector
- 114: charging determination circuit
- 116: USB power source
- 118: power delivery (PD) controller

## Claims

1. A vehicle battery charging apparatus connectable to a portable charger in conformance with a universal serial bus (USB) power delivery (PD) standard via a USB Type-C cable and a USB Type-C terminal, the vehicle battery charging apparatus comprising:
a power supply and reception circuit configured to selectively perform a power input operation as a power reception side or a power output operation as a power supply side, via the USB Type-C terminal;
a charging determination circuit configured to determine whether or not a battery installed in a vehicle requires charging; and
a supply requesting and reception setting circuit configured to request the portable charger to operate as the power supply side and to set the power supply and reception circuit to operate as the power reception side, when the charging determination circuit determines that the charging is required.

2. The vehicle battery charging apparatus as claimed in claim 1, further comprising:
a battery voltage detector configured to detect a terminal voltage of the battery,
wherein the charging determination circuit is configured to determine that the charging is required when the terminal voltage detected by the battery voltage detector is lower than a predetermined threshold value.

3. The vehicle battery charging apparatus as claimed in claim 2, wherein the supply requesting and reception setting circuit is configured to request the portable charger to operate as the power supply side and to set the power supply and reception circuit to operate as the power reception side at a voltage value corresponding to a level of the terminal voltage detected by the battery voltage detector.

4. The vehicle battery charging apparatus as claimed in one of claims 1 - 3, wherein
the battery has a rated voltage of 12 V, and
the supply requesting and reception setting circuit is configured to request the portable charger to operate as the power supply side and to set the power supply and reception circuit to operate as the power reception side corresponding to a profile of 9V3A when the terminal voltage is lower than a predetermined value that is less than or equal to 9 V, and to request the portable charger to operate as the power supply side and to set the power supply and reception circuit to operate as the power reception side corresponding to a profile of 15V3A when the terminal voltage is higher than the predetermined value.

5. The vehicle battery charging apparatus as claimed in one of claims 1 - 4, further comprising:
an operating part configured to be operated by a user,
wherein the charging determination circuit is configured to determine that the charging is required when the operating part is operated to instruct the charging.

6. The vehicle battery charging apparatus as claimed in claim 5, further comprising:
a battery voltage detector configured to detect a terminal voltage of the battery,
wherein the supply requesting and reception setting circuit is configured to request the portable charger to operate as the power supply side and to set the power supply and reception circuit to operate as the power reception side at a voltage value corresponding to a level of the terminal voltage detected by the battery voltage detector.

7. The vehicle battery charging apparatus as claimed in claim 6, wherein
the battery has a rated voltage of 12 V, and
the supply requesting and reception setting circuit is configured to request the portable charger to operate as the power supply side and to set the power supply and reception circuit to operate as the power reception side corresponding to a profile of 9V3A when the terminal voltage is lower than a predetermined value that is less than or equal to 9 V, and to request the portable charger to operate as the power supply side and to set the power supply and reception circuit to operate as the power reception side corresponding to a profile of 15V3A when the terminal voltage is higher than the predetermined value.
